# EUROPEAN PATENT APPLICATION

(11) **EP 4 559 576 A1**
(43) Date of publication of application: **28.05.2025**
(21) Application number: 23894272.6
(22) Date of filing: 05.10.2023
(51) Int. Cl.: B01J 35/57, B01J 32/00, B01J 35/50, C04B 37/00, C04B 38/00, H05B 3/14

(54) **HEATING ELEMENT**

(30) Priority: 21.11.2022 JP 2022185923
(71) Applicant: NGK Insulators, Ltd., Nagoya-shi, Aichi 467-8530 (JP)
(72) Inventor: MORITA, Yukiharu, Nagoya-shi, Aichi 467-8530 (JP)
(74) Representative: MERH-IP Matias Erny Reichl Hoffmann Patentanwälte PartG mbB
(86) International application number: PCT/JP2023/036368
(87) International publication number: WO 2024/111260

(57) **Abstract**

Provided is a heat generating element, which has excellent heat generation characteristics, and has a shape that can be easily adjusted. A heat generating element according to an embodiment of the present invention includes a plurality of honeycomb structure units, each of which includes partition walls, and is configured to generate heat by energization, the partition walls defining and forming a plurality of cells that extend from a first end surface to a second end surface, and serve as fluid flow passages. The plurality of honeycomb structure units include a first honeycomb structure unit and a second honeycomb structure unit. The first honeycomb structure unit and the second honeycomb structure unit are joined to each other through intermediation of a first joining portion. The first joining portion has a volume resistivity that is lower than a volume resistivity of the honeycomb structure unit. The volume resistivity of the first joining portion is 1 Ω·cm or less.

## Description

### Technical Field

The present invention relates to a heat generating element.

### Background Art

There has been proposed a configuration in which a honeycomb structural body that is used as a catalyst carrier or the like is energized to generate heat. For example, as disclosed in Patent Literature 1, at the time of treatment of a harmful substance in an exhaust gas emitted from a vehicle engine, when a temperature of a catalyst is low, the temperature of the catalyst is prevented from being increased up to a predetermined temperature, and hence there is a problem in that the exhaust gas is not sufficiently purified. In order to solve such a problem, there has been proposed a honeycomb structural body that can be used as a catalyst carrier, and can also function as a heat generating element.

### Citation List

### Patent Literature

[PTL 1] JP 6438939 B2

### Summary of Invention

### Technical Problem

Incidentally, it may be desired to utilize a heat generating element also in applications other than purification of an exhaust gas emitted from an internal combustion engine. For example, it has been desired that a shape of the heat generating element can be easily adjusted in accordance with the application.

In view of the above, the present invention provides a heat generating element, which has excellent heat generation characteristics, and has a shape that can be easily adjusted.

### Solution to Problem

1. According to an embodiment of the present invention, there is provided a heat generating element, including a plurality of honeycomb structure units, each of which includes partition walls, and is configured to generate heat by energization, the partition walls defining and forming a plurality of cells that extend from a first end surface to a second end surface, and serve as fluid flow passages, wherein the plurality of honeycomb structure units include a first honeycomb structure unit and a second honeycomb structure unit, wherein the first honeycomb structure unit and the second honeycomb structure unit are joined to each other through intermediation of a first joining portion, wherein the first joining portion has a volume resistivity that is lower than a volume resistivity of the honeycomb structure unit, and wherein the volume resistivity of the first joining portion is 1 Ω·cm or less.
2. In the heat generating element according to the above-mentioned item 1, the volume resistivity of the honeycomb structure unit may be 2 Ω·cm or more.
3. In the heat generating element according to the above-mentioned item 1 or 2, a ratio of the volume resistivity of the honeycomb structure unit to the volume resistivity of the first joining portion may be 2 or more.
4. The heat generating element according to any one of the above-mentioned items 1 to 3 may include a pair of first electrode portions configured to energize and heat the first honeycomb structure unit and the second honeycomb structure unit.
5. In the heat generating element according to any one of the above-mentioned items 1 to 4, the first joining portion may contain a component that is contained in each of the first electrode portions.
6. In the heat generating element according to any one of the above-mentioned items 1 to 5, the plurality of honeycomb structure units may include a third honeycomb structure unit. The first honeycomb structure unit and the third honeycomb structure unit may be joined to each other through intermediation of a second joining portion. The second joining portion may have a volume resistivity that is higher than a volume resistivity of the honeycomb structure unit.
7. The heat generating element according to the above-mentioned item 6 may include a pair of second electrode portions configured to energize and heat the third honeycomb structure unit.
8. In the heat generating element according to any one of the above-mentioned items 1 to 7, the honeycomb structure unit may include an outer peripheral wall that surrounds the partition walls. A cross section of the outer peripheral wall that is perpendicular to an extending direction of the cells in the honeycomb structure unit may have a rectangular shape or a square shape.
**9.** In the heat generating element according to any one of the above-mentioned items 1 to 8, the honeycomb structure unit may include a catalyst.

### Advantageous Effects of Invention

According to an embodiment of the present invention, a heat generating element, which has excellent heat generation characteristics, and has a shape that can be easily adjusted can be provided.

### Brief Description of Drawings

FIG. **1** is a sectional view for schematically illustrating a schematic configuration of a heat generating element according to a first embodiment of the present invention.
FIG. **2** is a perspective view for illustrating a schematic configuration of a first honeycomb structure unit forming the heat generating element illustrated in FIG. **1****.**
FIG. **3** is a sectional view for schematically illustrating a schematic configuration of a heat generating element according to a second embodiment of the present invention.

### Description of Embodiments

Embodiments of the present invention are described below with reference to the drawings. However, the present invention is not limited to these embodiments. For clearer illustration, some widths, thicknesses, shapes, and the like of respective portions may be schematically illustrated in the drawings in comparison to the embodiments. However, the widths, the thicknesses, the shapes, and the like are each merely an example, and do not limit the understanding of the present invention. In addition, in the drawings, the same or similar components are denoted by the same reference symbols, and repetitive description thereof may be omitted.

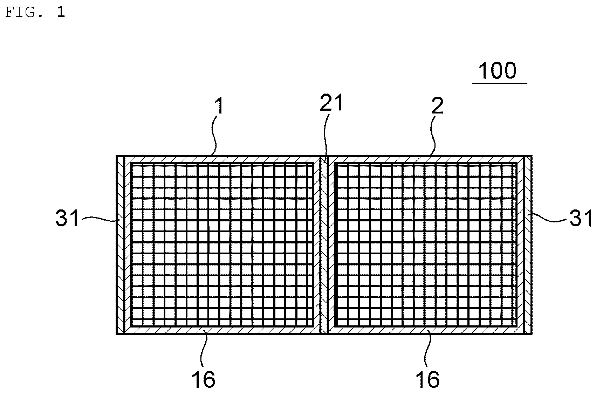

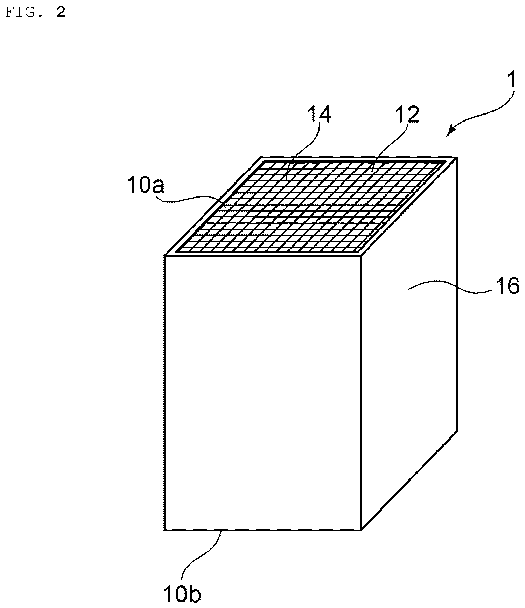

A heat generating element according to the embodiments of the present invention includes a plurality of honeycomb structure units that can generate heat by energization. FIG. **1** is a sectional view for schematically illustrating a schematic configuration of a heat generating element according to a first embodiment of the present invention, as viewed from above. FIG. **2** is a perspective view for illustrating a schematic configuration of a first honeycomb structure unit forming the heat generating element illustrated in FIG. **1****.**

A heat generating element **100** includes a first honeycomb structure unit **1** and a second honeycomb structure unit **2.** As illustrated in FIG. **2****,** the first honeycomb structure unit **1** includes partition walls **14** and an outer peripheral wall **16.** The partition walls **14** define and form a plurality of cells **12,** which extend from a first end surface **10a** to a second end surface **10b** (in a lengthwise direction), and can serve as fluid flow passages. The outer peripheral wall **16** is located on an outer periphery, and surrounds the partition walls **14.** Although FIG. **2** shows the first honeycomb structure unit **1** illustrated in FIG. **1** as a representative, the second honeycomb structure unit **2** also has the same configuration.

In the heat generating element **100,** the first honeycomb structure unit **1** and the second honeycomb structure unit **2** are arranged such that the respective outer peripheral walls **16** are adjacent to each other so that extending directions of the respective cells **12** (the lengthwise directions) in the first honeycomb structure unit **1** and the second honeycomb structure unit **2** are aligned with each other. In this case, the term "adjacent" encompasses not only a state of being located side by side directly , but also a state of being located side by side through intermediation of a joining portion. In the illustrated example, the heat generating element includes two honeycomb structure units, but may include three or more honeycomb structure units. When the heat generating element includes three or more honeycomb structure units, honeycomb structure units located side by side may be arranged adjacent to each other. The arrangement of the honeycomb structure units is not particularly limited.

The heat generating element **100** includes a first joining portion **21** provided between the first honeycomb structure unit **1** and the second honeycomb structure unit **2.** The first honeycomb structure unit **1** and the second honeycomb structure unit **2** are joined to each other through intermediation of the first joining portion **21.** The heat generating element **100** includes a pair of first electrode portions **31** and **31** that energize and heat the first honeycomb structure unit **1** and the second honeycomb structure unit **2.** The pair of first electrode portions **31** and **31** are arranged so as to face each other through intermediation of a plurality of honeycomb structure units. One first electrode portion **31** of the pair is arranged on the outer peripheral wall **16** of the first honeycomb structure unit **1,** and another first electrode portion **31** of the pair is arranged on the outer peripheral wall **16** of the second honeycomb structure unit **2.** With such arrangement, for example, a plurality of honeycomb structure units can be caused to uniformly generate heat.

The outer peripheral wall **16** of the honeycomb structure unit extends in the lengthwise direction. The plurality of cells **12** are each defined as a space extending in the lengthwise direction. In the illustrated example, a cross section of each of the cells **12** that is perpendicular to the lengthwise direction has a quadrangular shape, but may have any other polygonal shape, or may have any other shape such as a circular shape. A thickness of the partition wall **14** is, for example, from 70 µm to 500 µm. The number of the cells **12** per unit area in a plane orthogonal to the extending direction of the cells **12** is, for example, from 15 cells/cm² to 150 cells/cm². The thickness of the partition wall **14** and the number of cells **12** can be measured with, for example, a digital microscope.

A cross section of the outer peripheral wall **16** that is perpendicular to the lengthwise direction preferably has a rectangular shape or a square shape. With such a shape, a plurality of honeycomb structure units are easily arranged adjacent to each other, and hence extremely excellent assemblability of the heat generating element can be achieved. A thickness of the outer peripheral wall **16** is, for example, from 0.5 mm to 5 mm. In the example illustrated in FIG. **1****,** the two honeycomb structure units forming the heat generating element have the same shape and size, but the heat generating element may include a plurality of honeycomb structure units having different shapes and sizes. The thickness of the outer peripheral wall **16** can be measured with, for example, a digital microscope.

A volume resistivity of the honeycomb structure unit is 2 Ω·cm or more, preferably 10 Ω·cm or more, more preferably 15 Ω·cm or more. With such a volume resistivity, a failure such as an excessive electric current flowing, which may be caused depending on the applied voltage, can be prevented. Meanwhile, a volume resistivity of the honeycomb structure unit is, for example, 2,000 Ω·cm or less, preferably 500 Ω·cm or less, more preferably 100 Ω·cm or less. With such a volume resistivity, the honeycomb structure unit can sufficiently generate heat by energization.

The volume resistivity may be a value measured at a temperature of 400°C using a four-terminal method. Specifically, the measurement is performed as follows. A test piece, which is made of the same material as a material for forming an object to be measured, and has a size of 10 mm in height × 50 mm in width × 10 mm in length, is prepared. Silver paste is applied to the entirety of both end surfaces (both end surfaces in the lengthwise direction) of the test piece, followed by wiring of a conductive wire, and under a state in which a thermocouple is placed in a center part of the test piece, voltage is applied to the test piece by using a voltage-applied current measuring device. A change over time in temperature of the test piece at the time of the application of the voltage is checked with a recorder, and a current value and a voltage value are measured at the point of time when the test piece has a temperature of 400°C. Thus, the volume resistivity can be calculated by the test piece size.

The honeycomb structure unit is preferably made of ceramics. With the adoption of ceramics, the above-mentioned volume resistivity can be satisfactorily satisfied. Further, ceramics has a low thermal expansion coefficient, and hence can have excellent shape stability as well.

The honeycomb structure unit is made of, for example, a material containing silicon carbide. The honeycomb structure unit is preferably made of a material containing a silicon-silicon carbide composite material as a main component. Herein, the expression "containing as a main component" means that the content of the component in the material is, for example, 80 mass% or more, preferably 90 mass% or more. The silicon-silicon carbide composite material may be a material in which a plurality of silicon carbide particles are bonded to each other by metal silicon. In the silicon-silicon carbide composite material, silicon carbide particles may function as aggregate, and silicon may function as a binding material. With the use of the material as described above, the above-mentioned volume resistivity can be satisfactorily achieved.

In the silicon-silicon carbide composite material that may form the honeycomb structure unit, a ratio of a mass of silicon to the sum of a mass of silicon carbide particles and the mass of silicon is preferably from 10 mass% to 40 mass%, more preferably from 15 mass% to 35 mass%. The volume resistivity of the honeycomb structure unit may also be controlled by adjusting a porosity thereof.

Typically, the honeycomb structure unit can be obtained by drying and firing a molded body obtained by molding of a molding material containing a ceramic raw material. When the honeycomb structure unit is made of the above-mentioned silicon-silicon carbide composite material, the above-mentioned molding material may contain silicon carbide (for example, silicon carbide powder) and metal silicon (for example, metal silicon powder). Examples of other raw material that may be contained in the molding material include a binder, a dispersant, and an additive.

Typically, the honeycomb structure unit may be used as a catalyst carrier, and a catalyst may be supported on the partition walls **14** of the honeycomb structure unit. For example, CO, NOₓ, and a hydrocarbon in a fluid (e.g., gas) passing through the cell **12** can be changed to a harmless substance by a catalytic reaction. The catalyst may preferably contain a precious metal (e.g., platinum, rhodium, palladium, ruthenium, indium, silver, or gold), aluminum, nickel, zirconium, titanium, cerium, cobalt, manganese, zinc, copper, tin, iron, niobium, magnesium, lanthanum, samarium, bismuth, barium, and combinations thereof.

The pair of first electrode portions **31** and **31** are arranged so as to face each other through intermediation of the plurality of honeycomb structure units. A formation region of the first electrode portion **31** is not particularly limited, but, for example, the first electrode portion **31** is formed into a band shape extending in the extending direction of the cells **12** in the honeycomb structure unit. Although not shown, terminals may be provided to the pair of first electrode portions **31** and **31,** respectively. One of the terminals may be connected to a positive pole of a power source, and another one of the terminals may be connected to a negative pole of the power source. A thickness of the first electrode portion **31** is, for example, from 100 µm to 5 mm.

The volume resistivity of the first electrode portion **31** is preferably from 1×10⁻⁶ Ω·cm to 1 Ω·cm, more preferably from 0.01 Ω·cm to 0.2 Ω·cm.

The first electrode portion **31** may include any appropriate material which can satisfy the above-mentioned volume resistivity. For example, a metal, conductive ceramics, or a composite material (cermet) of a metal and conductive ceramics may be used as a constituent material of the first electrode portion **31.** Examples of the metal include Cr, Fe, Co, Ni, Si, and Ti. Those materials may be used alone or in combination. When two or more kinds thereof are used in combination, an alloy of two or more kinds of metals may be used. Examples of the conductive ceramics include: silicon carbide (SiC); and metal compounds, for example, metal silicides, such as tantalum silicide (TaSi₂) and chromium silicide (CrSi₂). Specific examples of the composite material (cermet) of a metal and conductive ceramics include a composite material of a metal silicon and silicon carbide, and a composite material of the metal silicide, a metal silicon, and silicon carbide. In addition, specific examples of the composite material (cermet) of a metal and conductive ceramics include composite materials obtained by adding one kind or two or more kinds of insulating ceramics, such as alumina, mullite, zirconia, cordierite, silicon nitride, and aluminum nitride, to one kind or two or more kinds of the above-mentioned compounds or a metal from the viewpoint of reducing thermal expansion.

It is preferred that the first electrode portion **31** be made of a material having the same quality as that of the material of the honeycomb structure unit. For example, it is preferred that the first electrode portion **31** be made of a material containing silicon carbide (for example, a material containing a silicon-silicon carbide composite material as a main component). With such a configuration, a difference in thermal expansion coefficient between the honeycomb structure unit and the first electrode portion **31** can be reduced, and hence joining strength therebetween can be increased. Further, the above-mentioned configuration can also contribute to an improvement in productivity. In the silicon-silicon carbide composite material that may form the first electrode portion **31,** a ratio of a mass of silicon to the sum of a mass of silicon carbide particles and the mass of silicon is preferably from 20 mass% to 50 mass%, more preferably from 20 mass% to 40 mass%. The volume resistivity of the first electrode portion **31** may be controlled also by adjusting a porosity thereof.

The first joining portion **21** has a volume resistivity that is lower than the above-mentioned volume resistivity of the honeycomb structure unit. The volume resistivity of the first joining portion **21** is 1 Ω·cm or less, preferably 0.2 Ω·cm or less. With such a first joining portion being provided, the heat generating element can have extremely excellent heat generation characteristics. Specifically, when a temperature of the first joining portion that does not serve as fluid flow passages is prevented from becoming excessively high due to energization, the applied energy can be efficiently utilized for increasing a temperature of the honeycomb structure unit serving as fluid flow passages. Further, a failure such as occurrence of a crack in a boundary portion between the first joining portion and the honeycomb structure unit or the honeycomb structure unit can be prevented. Further, with the plurality of honeycomb structure units being joined to each other through intermediation of the first joining portion, a shape of the heat generating element to be obtained can be adjusted in accordance with the application. The volume resistivity of the first joining portion **21** is, for example, 1×10⁻⁶ Ω·cm or more. A ratio of the above-mentioned volume resistivity of the honeycomb structure unit to the volume resistivity of the first joining portion **21** is preferably 2 or more, more preferably 10 or more, still more preferably 20 or more. Meanwhile, the ratio of the above-mentioned volume resistivity of the honeycomb structure unit to the volume resistivity of the first joining portion **21** is, for example, 1×10⁷ or less.

It is only required that the first joining portion **21** which can satisfy the above-mentioned volume resistivity be provided in at least a part of a region in which the first honeycomb structure unit **1** and the second honeycomb structure unit **2** face each other. As illustrated in the figure, the first joining portion **21** is preferably provided over the entire region in which the first honeycomb structure unit **1** and the second honeycomb structure unit **2** face each other. A thickness of the first joining portion **21** is, for example, from 500 µm to 5 mm. The thickness of the first joining portion **21** may correspond to a distance between the first honeycomb structure unit **1** and the second honeycomb structure unit **2.**

The first joining portion **21** may be made of any appropriate material as long as the first joining portion **21** can satisfy the above-mentioned volume resistivity. For example, a metal, conductive ceramics, or a composite material (cermet) of a metal and conductive ceramics can be used as a constituent material of the first joining portion **21.** Examples of the metal include Cr, Fe, Co, Ni, Si, and Ti. Those materials may be used alone or in combination. When two or more kinds thereof are used in combination, an alloy of two or more kinds of metals may be used. Examples of the conductive ceramics include: silicon carbide (SiC); and metal compounds, for example, metal silicides, such as tantalum silicide (TaSi₂) and chromium silicide (CrSi₂). Specific examples of the composite material (cermet) of a metal and conductive ceramics include a composite material of a metal silicon and silicon carbide, and a composite material of the metal silicide, a metal silicon, and silicon carbide. In addition, specific examples of the composite material (cermet) of a metal and conductive ceramics include composite materials obtained by adding one kind or two or more kinds of insulating ceramics, such as alumina, mullite, zirconia, cordierite, silicon nitride, and aluminum nitride, to one kind or two or more kinds of the above-mentioned compounds or a metal from the viewpoint of reducing thermal expansion.

It is preferred that the first joining portion **21** be made of a material having the same quality as that of the material of the first electrode portion **31.** Specifically, it is preferred that the first joining portion **21** contain a component that is contained in the first electrode portion **31.** Such a configuration can contribute to an improvement in productivity.

Further, the first joining portion **21** may be made of a material having the same quality as that of the material of the honeycomb structure unit. For example, it is preferred that the first joining portion **21** be made of a material containing silicon carbide (for example, a material containing a silicon-silicon carbide composite material as a main component). With such a configuration, a difference in thermal expansion coefficient between the honeycomb structure unit and the first joining portion **21** can be reduced, and hence joining strength therebetween can be increased. Further, the above-mentioned configuration can also contribute to an improvement in productivity. In the silicon-silicon carbide composite material that may form the first joining portion **21,** a ratio of a mass of silicon to the sum of a mass of silicon carbide particles and the mass of silicon is preferably from 20 mass% to 50 mass%, more preferably from 20 mass% to 40 mass%. The volume resistivity of the first joining portion **21** may be controlled also by adjusting a porosity thereof.

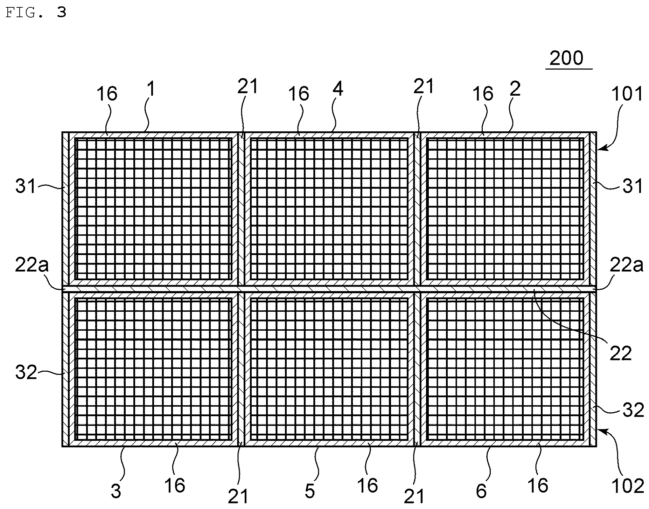

FIG. **3** is a sectional view for schematically illustrating a schematic configuration of a heat generating element according to a second embodiment of the present invention. A heat generating element **200** includes a first heat generating portion **101** and a second heat generating portion **102.**

The first heat generating portion **101** includes a first honeycomb structure unit **1,** a second honeycomb structure unit **2,** and a fourth honeycomb structure unit **4** arranged between the first honeycomb structure unit **1** and the second honeycomb structure unit **2.** In the first heat generating portion **101,** the first honeycomb structure unit **1,** the fourth honeycomb structure unit **4,** and the second honeycomb structure unit **2** are arranged such that outer peripheral walls **16** located side by side, among respective outer peripheral walls **16** of the first honeycomb structure unit **1,** the fourth honeycomb structure unit **4,** and the second honeycomb structure unit **2,** are adjacent to each other so that extending directions of the respective cells **12** (the lengthwise directions) in the first honeycomb structure unit **1,** the fourth honeycomb structure unit **4,** and the second honeycomb structure unit **2** are aligned with each other.

The first heat generating portion **101** includes: a first joining portion **21** provided between the first honeycomb structure unit **1** and the fourth honeycomb structure unit **4;** and a first joining portion **21** provided between the second honeycomb structure unit **2** and the fourth honeycomb structure unit **4.** The first honeycomb structure unit **1** and the fourth honeycomb structure unit **4** are joined to each other through intermediation of the first joining portion **21** arranged therebetween. The second honeycomb structure unit **2** and the fourth honeycomb structure unit **4** are joined to each other through intermediation of the first joining portion **21** arranged therebetween. The first heat generating portion **101** includes a pair of first electrode portions **31** and **31** that energize and heat the first honeycomb structure unit **1,** the fourth honeycomb structure unit **4,** and the second honeycomb structure unit **2.** One first electrode portion **31** of the pair is provided on the outer peripheral wall **16** of the first honeycomb structure unit **1,** and another first electrode portion **31** of the pair is provided on the outer peripheral wall **16** of the second honeycomb structure unit **2.**

The second heat generating portion **102** includes a third honeycomb structure unit **3,** a fifth honeycomb structure unit **5,** and a sixth honeycomb structure unit **6.** In the second heat generating portion **102,** the third honeycomb structure unit **3,** the fifth honeycomb structure unit **5,** and the sixth honeycomb structure unit **6** are arranged such that outer peripheral walls **16** located side by side, among respective outer peripheral walls **16** of the third honeycomb structure unit **3,** the fifth honeycomb structure unit **5,** and the sixth honeycomb structure unit **6,** are adjacent to each other so that extending directions of the respective cells **12** (the lengthwise directions) in the third honeycomb structure unit **3,** the fifth honeycomb structure unit **5,** and the sixth honeycomb structure unit **6** are aligned with each other.

The second heat generating portion **102** includes: a first joining portion **21** provided between the third honeycomb structure unit **3** and the fifth honeycomb structure unit **5;** and a first joining portion **21** provided between the fifth honeycomb structure unit **5** and the sixth honeycomb structure unit **6.** The third honeycomb structure unit **3** and the fifth honeycomb structure unit **5** are joined to each other through intermediation of the first joining portion **21** arranged therebetween. The fifth honeycomb structure unit 5 and the sixth honeycomb structure unit **6** are joined to each other through intermediation of the first joining portion **21** arranged therebetween. The second heat generating portion **102** includes a pair of second electrode portions **32** and **32** that energize and heat the third honeycomb structure unit **3,** the fifth honeycomb structure unit **5,** and the sixth honeycomb structure unit **6.** The pair of second electrode portions **32** and **32** are arranged so as to face each other through intermediation of a plurality of honeycomb structure units. One second electrode portion **32** of the pair is provided on the outer peripheral wall **16** of the third honeycomb structure unit **3,** and another second electrode portion **32** of the pair is provided on the outer peripheral wall **16** of the sixth honeycomb structure unit **6.**

The pair of second electrode portions **32** and **32** are arranged so as to face each other through intermediation of the plurality of honeycomb structure units. A formation region of the second electrode portion **32** is not particularly limited, but, for example, the second electrode portion **32** is formed into a band shape extending in the extending direction of the cells **12** in the honeycomb structure unit. Although not shown, terminals may be provided to the pair of second electrode portions **32** and **32,** respectively. One of the terminals may be connected to a positive pole of a power source, and another one of the terminals may be connected to a negative pole of the power source. Regarding details of a thickness, a volume resistivity, and a constituent material of the second electrode portion **32,** the same description as that given in the first electrode portion **31** as described above can be applied.

In the heat generating element **200,** the honeycomb structure units included in the first heat generating portion **101** and the honeycomb structure units included in the second heat generating portion **102** are respectively arranged adjacent to each other so that the extending directions of the respective cells **12** (the lengthwise directions) are aligned with each other. The heat generating element **200** includes a second joining portion **22** provided between the first heat generating portion **101** and the second heat generating portion **102.** The first heat generating portion **101** and the second heat generating portion **102** are joined to each other through intermediation of the second joining portion **22.** For example, the first honeycomb structure unit **1** and the third honeycomb structure unit **3** are joined to each other through intermediation of the second joining portion **22.**

A volume resistivity of the second joining portion **22** may be set to be higher than the above-mentioned volume resistivity of the honeycomb structure unit. In this case, the volume resistivity of the second joining portion **22** is preferably 50 Ω·cm or more, more preferably 200 Ω·cm or more, still more preferably 1,000 Ω·cm or more. With such a second joining portion being provided, the honeycomb structure unit included in each of the heat generating portions can be caused to effectively generate heat. In addition, a degree of freedom in shape design of the heat generating element to be obtained can be further increased. Meanwhile, the volume resistivity of the second joining portion **22** is, for example, 1×10¹⁴ Ω·cm or less. A ratio of the above-mentioned volume resistivity of the honeycomb structure unit to the volume resistivity of the second joining portion **22** is preferably 0.1 or less, more preferably 0.01 or less, still more preferably 0.005 or less. Meanwhile, the ratio of the above-mentioned volume resistivity of the honeycomb structure unit to the volume resistivity of the second joining portion **22** is, for example, 1×10⁻¹³ or more.

It is only required that the second joining portion **22** which can satisfy the above-mentioned volume resistivity be provided in at least a part of a region in which the first honeycomb structure unit **1** and the third honeycomb structure unit **3** face each other. As illustrated in the figure, the second joining portion **22** is preferably provided over the entire region in which the first honeycomb structure unit **1** and the third honeycomb structure unit **3** face each other. A thickness of the second joining portion **22** is, for example, from 500 µm to 5 mm. The thickness of the second joining portion **22** may correspond to a distance between the first honeycomb structure unit **1** and the third honeycomb structure unit **3.**

In the example illustrated in FIG. **3****,** the second joining portion **22** is provided over the entire region in which the first heat generating portion **101** and the second heat generating portion **102** face each other. Further, the first electrode portion **31** of the first heat generating portion **101** and the second electrode portion **32** of the second heat generating portion **102** are separated from each other by the second joining portion **22.** The second joining portion **22** has end portions **22a** each of which is located between the first electrode portion **31** and the second electrode portion **32.** With such arrangement, heat generation by the first heat generating portion **101** and the second heat generating portion **102** can be controlled in the first heat generating portion **101** and the second heat generating portion **102,** respectively. For example, in each of the first heat generating portion **101** and the second heat generating portion **102,** electric power to be applied can be controlled. Unlike the illustrated example, the first electrode portion **31** and the second electrode portion **32** may be electrically connected to each other. For example, each of the end portions **22a** of the second joining portion **22** may be located within a range in which the honeycomb structure units included in the first heat generating portion **101** and the honeycomb structure units included in the second heat generating portion **102** face each other, and the first electrode portion **31** and the second electrode portion **32** may be electrically connected to each other.

The second joining portion **22** may be made of any appropriate material which can satisfy the above-mentioned volume resistivity. The second joining portion **22** is preferably made of ceramics. With the adoption of ceramics, the above-mentioned volume resistivity can be satisfactorily satisfied. In addition, the ceramics has a low thermal expansion coefficient, and may also be excellent in shape stability. Examples of the ceramics include cordierite, mullite, alumina, spinel, silicon carbide, silicon nitride, and aluminum titanate. Those ceramics may be used alone or in combination of two or more kinds thereof.

The present invention is not limited to the above-mentioned embodiments, and various modifications may be made thereto. For example, the configurations described in the above-mentioned embodiments may each be replaced by substantially the same configuration, a configuration having the same action and effect, and a configuration that can achieve the same object.

### Industrial Applicability

The heat generating element according to each of the embodiments of the present invention may be used as, for example, a catalyst carrier having a catalyst supported thereon.

### Reference Signs List

**1** to **6** honeycomb structure unit, **12** cell, **14** partition wall, **16** outer peripheral wall, **21** first joining portion, **22** second joining portion, **31** first electrode portion, **32** second electrode portion, **100** heat generating element, **101** first heat generating portion, **102** second heat generating portion, **200** heat generating element

## Claims

1. A heat generating element, comprising a plurality of honeycomb structure units, each of which includes partition walls, and is configured to generate heat by energization, the partition walls defining and forming a plurality of cells that extend from a first end surface to a second end surface, and serve as fluid flow passages,
wherein the plurality of honeycomb structure units include a first honeycomb structure unit and a second honeycomb structure unit,
wherein the first honeycomb structure unit and the second honeycomb structure unit are joined to each other through intermediation of a first joining portion,
wherein the first joining portion has a volume resistivity that is lower than a volume resistivity of the honeycomb structure unit, and
wherein the volume resistivity of the first joining portion is 1 Ω·cm or less.

2. The heat generating element according to claim 1, wherein the volume resistivity of the honeycomb structure unit is 2 Ω·cm or more.

3. The heat generating element according to claim 1 or 2, wherein a ratio of the volume resistivity of the honeycomb structure unit to the volume resistivity of the first joining portion is 2 or more.

4. The heat generating element according to claim 1 or 2, further comprising a pair of first electrode portions configured to energize and heat the first honeycomb structure unit and the second honeycomb structure unit.

5. The heat generating element according to claim 4, wherein the first joining portion contains a component that is contained in each of the first electrode portions.

6. The heat generating element according to claim 1 or 2,
wherein the plurality of honeycomb structure units include a third honeycomb structure unit,
wherein the first honeycomb structure unit and the third honeycomb structure unit are joined to each other through intermediation of a second joining portion, and
wherein the second joining portion has a volume resistivity that is higher than a volume resistivity of the honeycomb structure unit.

7. The heat generating element according to claim 6, further comprising a pair of second electrode portions configured to energize and heat the third honeycomb structure unit.

8. The heat generating element according to claim 1 or 2,
wherein the honeycomb structure unit includes an outer peripheral wall that surrounds the partition walls, and
wherein a cross section of the outer peripheral wall that is perpendicular to an extending direction of the cells in the honeycomb structure unit has a rectangular shape or a square shape.

9. The heat generating element according to claim 1 or 2, wherein the honeycomb structure unit includes a catalyst.
